# EUROPEAN PATENT APPLICATION

(11) **EP 2 444 290 A1**
(43) Date of publication of application: **25.04.2012**
(21) Application number: 10789275.4
(22) Date of filing: 19.02.2010
(51) Int. Cl.: B60T 7/22, B60T 7/12

(54) **VEHICLE BRAKING CONTROL DEVICE**

(30) Priority: 19.06.2009 JP 2009146274
(71) Applicant: Bosch Corporation, Tokyo 150-8360 (JP)
(72) Inventor: DANZ Christian, Yokohamashi-shi Kanagawa 224-8501 (JP); MATSUSHITA Takuya, Yokohamashi-shi Kanagawa 224-8501 (JP)
(74) Representative: Dreiss
(86) International application number: PCT/JP2010/052537
(87) International publication number: WO 2010/146897

(57) **Abstract**

To provide a vehicular braking control device which, at the time of a collision of a host vehicle, can apply a braking force to the host vehicle while reducing the potential for a rear-end collision from a following vehicle.

A vehicular braking control device equipped with collision detecting means that detects a collision of a host vehicle and braking force applying means that applies a braking force to the host vehicle when a collision of the host vehicle has been detected includes: following vehicle running state detecting means that detects whether or not there is, and the running state of, a following vehicle; following vehicle braking force detecting means that detects whether or not the following vehicle has a braking control device on board; and avoidance determining means which, in a case where there is the following vehicle at the time of a collision of the host vehicle, discriminates whether or not the following vehicle can avoid the host vehicle on the basis of information detected by the following vehicle running state detecting means and the following vehicle braking force detecting means, wherein the braking force applying means varies the braking force it applies to the host vehicle on the basis of the result of the determination by the avoidance determining means.

## Description

### TECHNICAL FIELD

The present invention relates to a vehicular braking control device and particularly relates to a vehicular braking control device for applying, at the time of a collision of a vehicle, a braking force to the vehicle to avoid a secondary collision.

### BACKGROUND ART

In recent years, a variety of vehicular braking control devices have been proposed. As one aspect of such vehicular braking control devices, there is a vehicular braking control device configured in such a way that, at the time of a collision of a host vehicle, it automatically actuates a braking device and applies a braking force to the vehicle in order to avoid a secondary collision with another vehicle or an obstacle caused by the driver losing control of the host vehicle.

For example, there has been proposed a vehicular automatic braking control device that can avoid expanding a chain-reaction accident and reduce the impact sustained by a host vehicle due to a rear-end collision from a following vehicle. Specifically, there has been disclosed a vehicular automatic braking control device that receives a signal indicating the occurrence of a collision or prognosticating a collision of a second following vehicle into a first following vehicle, raises the brake pressure to a first pressure in a case where the vehicle velocity of the host vehicle is equal to or less than a reference Velocity, lowers the brake pressure to a second pressure when a condition for lowering the brake pressure is met after a collision into the host vehicle, and raises the brake pressure to the first pressure when a condition for again raising the brake pressure is met (see patent document 1) .

Further, as another vehicular braking control device, there has been proposed a vehicle braking control device configured to prevent a secondary collision in a case where a collision of a vehicle has occurred and, when the driver has the will to travel, ensure that that will to travel is fulfilled. Specifically, there has been proposed a vehicle braking control device including: collision detecting means that detects a collision of a vehicle; braking force applying means that applies a braking force to the vehicle when a collision of the vehicle has been detected; travel request detecting means that detects a driver travel request; and braking force decreasing means which, when the driver travel request is being detected, decreases the braking force applied to the vehicle by the braking force applying means compared to a case where the driver travel request is not being detected (see patent document 2) .

### PRIOR ART DOCUMENTS

### PATENT DOCUMENTS

Patent Document 1: JP-A-2007-230500
Patent Document 2: JP-A-2000-313323

### SUMMARY OF THE INVENTION

### PROBLEM THAT THE INVENTION IS TO SOLVE

The vehicular automatic braking control device described in patent document 1 is a device intended to alleviate the shock of a rear-end collision in a case where the host vehicle will be rear-ended by a following vehicle and to also avoid a rear-end collision into a vehicle in front. In this vehicular automatic braking control device, avoiding a rear-end collision into the host vehicle by a following vehicle when the automatic braking control device has been actuated at the time of a collision of the host vehicle is not taken into consideration.

Further, the vehicle braking control device described in patent document 2 is configured in such a way that, at the time of a collision of the host vehicle, the magnitude of the braking force is changed depending only on whether or not there is a driver travel request in a case where the velocity of the host vehicle is low. In a case where the braking control device of a vehicle is configured in this way, the host vehicle abruptly stops when there is no will to travel on the part of the driver, but if the inter-vehicle distance between the following vehicle and the host vehicle is not sufficient or if the following vehicle is not equipped with a braking control device such as an antilock braking system (ABS), there is the fear that the host vehicle will sustain a rear-end collision from the following vehicle due to the abrupt stopping of the host vehicle.

Therefore, the inventors of the present invention undertook devoted investigations to discover that this problem can be solved by varying, in a vehicular braking control device for avoiding a secondary collision at the time of a host vehicle collision, the braking force applied to the host vehicle by the braking force applying means depending on whether or not there is a circumstance in which the following vehicle can avoid the host vehicle when a collision of the host vehicle has been detected, and thus the present inventors completed the present invention. That is, it is an object of the present invention to provide a vehicular braking control device which, at the time of a collision of a host vehicle, can apply a braking force to the host vehicle and avoid a secondary collision of the host vehicle while reducing the fear of a rear-end collision from a following vehicle.

### MEANS FOR SOLVING THE PROBLEM

According to the present invention, there is provided a vehicular braking control equipped with collision detecting means that detects a collision of a host vehicle and braking force applying means that applies a braking force to the host vehicle when a collision of the host vehicle has been detected, the vehicular braking control device including: following vehicle running state detecting means that detects whether or not there is a following vehicle and the running state thereof; following vehicle braking force detecting means that detects whether or not the following vehicle has a braking control device on board; and avoidance determining means which, in a case where there is the following vehicle at the time of a collision of the host vehicle, discriminates whether or not the following vehicle can avoid the host vehicle on the basis of information detected by the following vehicle running state detecting means and the following vehicle braking force detecting means, wherein the braking force applying means varies the braking force it applies to the host vehicle on the basis of the result of the determination by the avoidance determining means; and thus the above-described problem can be solved.

Further, in configuring the vehicular braking control device of the present invention, it is preferred that in a case where it is not discriminated that the following vehicle can avoid the host vehicle, the braking force applying means applies the braking force in such a way as to guide the host vehicle to a position where the host vehicle will not impede the traveling direction of the following vehicle.

Further, in configuring the vehicular braking control device of the present invention, it is preferred that the vehicular braking control device further includes road shoulder information detecting means that detects whether or not there is a road shoulder in the traveling direction of the host vehicle at the time of a collision of the host vehicle, wherein in a case where it is not discriminated that the following vehicle can avoid the host vehicle, when the road shoulder has been detected, the braking force applying means applies the braking force in such a way as to guide the host vehicle in the road shoulder direction.

Further, in configuring the vehicular braking control device of the present invention, it is preferred that the vehicular braking control device further includes obstacle detecting means that detects whether or not there is an obstacle in the traveling direction of the host vehicle at the time of a collision of the host vehicle, wherein in a case where it has been discriminated that the following vehicle can avoid the host vehicle, when an obstacle has been detected in front of the host vehicle, the braking force applying means applies the braking force in such a way as to promptly stop the host vehicle.

Further, in configuring the vehicular braking control device of the present invention, it is preferred that in a case where it has been discriminated that the following vehicle can avoid the host vehicle, when an obstacle has not been detected in front of the host vehicle and the road shoulder has been detected, the braking force applying means applies the braking force in such a way as to guide the host vehicle in the road shoulder direction.

Further, in configuring the vehicular braking control device of the present invention, it is preferred that in a case where it has been discriminated that the following vehicle can avoid the host vehicle, the braking force applying means applies the braking force in such a way as to promptly stop the host vehicle.

Further, in configuring the vehicular braking control device of the present invention, it is preferred that the avoidance determining means detects whether or not there is an inter-vehicle distance in which the following vehicle can stop without colliding into the host vehicle when the host vehicle has been promptly stopped by the braking force applying means.

### ADVANTAGEOUS EFFECTS OF THE INVENTION

According to the vehicular braking control device of the present invention, at the time of a collision of the host vehicle, whether or not the following vehicle can avoid the host vehicle is discriminated on the basis of the running state of the following vehicle and whether or not the following vehicle has a braking control device on board, and a braking force that differs depending on the result of that determination is applied to the host vehicle by the braking force applying means. Consequently, in a circumstance where the following vehicle can avoid the host vehicle, the host vehicle can be promptly and safely stopped, and in a circumstance where it will be difficult for the following vehicle to avoid the host vehicle, it becomes easy to guide the host vehicle to a safer position. As a result, at the time of a collision of the host vehicle, it becomes easy to safely stop the host vehicle while reducing the fear of a rear-end collision from the following vehicle or a secondary collision into an obstacle in front.

Further, in the vehicular braking control device of the present invention, by configuring the vehicular braking control device in such a way that, in a circumstance where it will be difficult for the following vehicle to avoid the host vehicle at the time of a collision of the host vehicle, the braking force applying means applies the braking force to the host vehicle in such a way as to guide the host vehicle to a position where the host vehicle will not impede the traveling direction of the following vehicle, the host vehicle can be stopped while reducing the risk of a rear-end collision into the host vehicle by the following vehicle.

Further, in the vehicular braking control device of the present invention, by configuring the vehicular braking control device in such a way that, in a circumstance where it will be difficult for the following vehicle to avoid the host vehicle at the time of a collision of the host vehicle, the braking force applying means applies the braking force in such a way as to guide the host vehicle in the road shoulder direction, the host vehicle can be stopped in a safer place while further reducing the risk of a rear-end collision into the host vehicle by the following vehicle.

Further, in the vehicular braking control device of the present invention, by configuring the vehicular braking control device in such a way that, in a circumstance where the following vehicle can avoid the host vehicle at the time of a collision of the host vehicle, when an obstacle has been detected in front, the braking force applying means applies the braking force in such a way as to promptly stop the host vehicle, the host vehicle can be stopped while reducing the risk of a collision into the obstacle in front.

Further, in the vehicular braking control device of the present invention, by configuring the vehicular braking control device in such a way that, in a circumstance where the following vehicle can avoid the host vehicle at the time of a collision of the host vehicle, when an obstacle has not been detected in front and the road shoulder has been detected, the braking force applying means applies the braking force in such a way as to guide the host vehicle in the road shoulder direction, the host vehicle can be stopped in a safer place while ensuring the safety of driveways.

Further, in the vehicular braking control device of the present invention, by configuring the vehicular braking control device in such a way that, in a circumstance where the following vehicle can avoid the host vehicle at the time of a collision of the host vehicle, the braking force applying means applies the braking force in such a way as to promptly stop the host vehicle, the host vehicle can be stopped while avoiding a collision into an obstacle in front or a rear-end collision from the following vehicle regardless of whether or not there is an obstacle in front.

Further, in the vehicular braking control device of the present invention, by configuring the vehicular braking control device in such a way that the avoidance determining means detects whether or not there is a sufficient inter-vehicle distance in which the following vehicle can stop without colliding into the host vehicle at the time of a collision of the host vehicle, it becomes easy to guide the host vehicle to a safe position in accordance with the potential for the following vehicle to rear-end the host vehicle.

### BRIEF DESCRIPTION OF THE DRAWINGS

FIG. 1 is a diagram for describing a configuration example of a vehicle that has a vehicular braking control device (SCM control device) of the present embodiment on board;
FIG. 2 is a block diagram showing an example of the configuration of the vehicular braking control device (SCM control device) of the present embodiment;
FIG. 3 is a diagram showing braking force application modes selected by braking force applying means of the vehicular braking control device (SCM control device) of the present embodiment; and

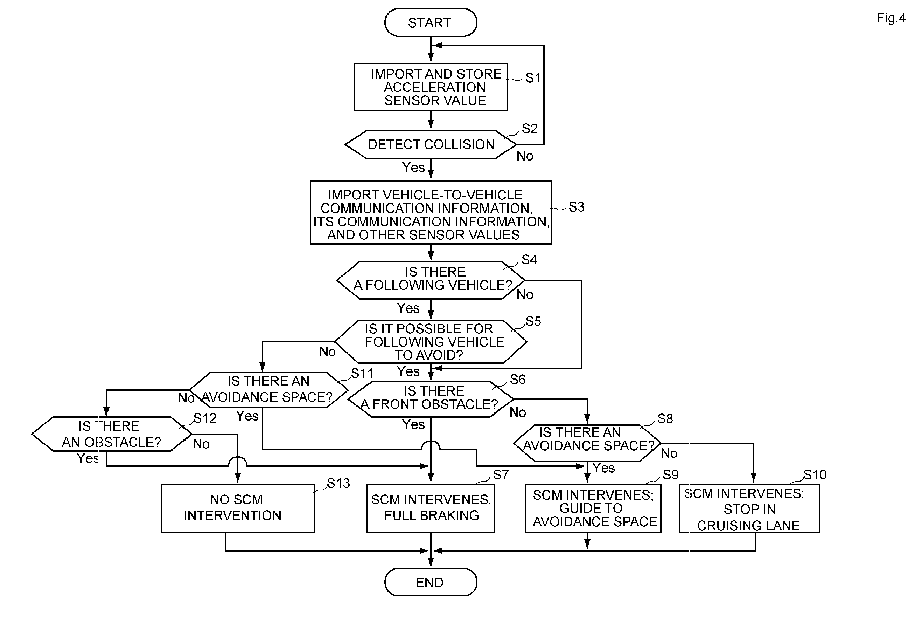

FIG. 4 is a diagram showing a control flow performed by the vehicular braking control device (SCM control device) of the present embodiment.

### MODE FOR CARRYING OUT THE INVENTION

An embodiment relating to a vehicular braking control device of the present invention will be specifically described below with reference to the drawings. However, the embodiment below is intended to represent one aspect of the present invention, is not intended to limit this invention, and can be arbitrarily changed within the scope of the present invention. Members to which the same reference signs are given in the drawings represent identical members, and description thereof is appropriately omitted.

In the present specification below, "full braking state" means a braking control state for stopping a host vehicle 10 in the shortest amount of time to the extent that the host vehicle 10 does not spin or the like and become unbrakable.

### 1. Overall Configuration of Vehicle

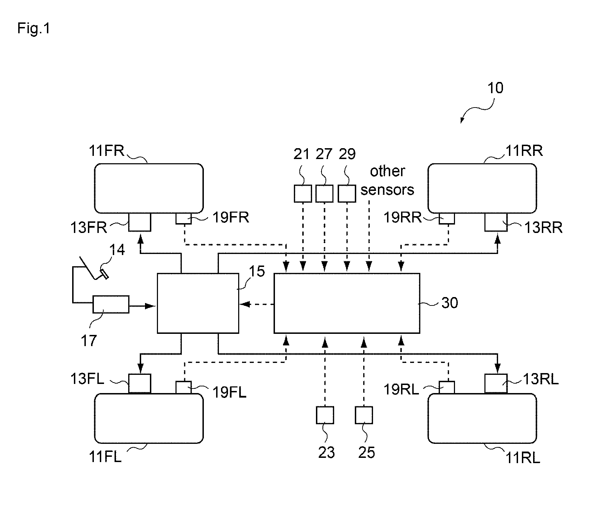

FIG. 1 shows a configuration example of a vehicle 10 that has a vehicular braking control device 30 pertaining to an embodiment of the present invention on board.
This vehicle 10 is configured in such a way that by controlling, with an oil hydraulic circuit 15, the hydraulic oil pressure on wheel cylinders 13FL, 13FR, 13RL, and 13RR of wheels 11FL, 11FR, 11RL, and 11RR, the braking force of the wheels 11FL, 11FR, 11RL, and 11RR is controlled. The oil hydraulic circuit 15 is an oil hydraulic circuit that configures a publicly known brake pressure control device, and the configuration thereof is not particularly limited. The hydraulic oil pressure on the wheel cylinders 13FL, 13FR, 13RL, and 13RR is, for example, controlled in accordance with the pressure inside a master cylinder 17 that is driven by the depression of a brake pedal 14 by the driver.

The master cylinder 17 is equipped with an unillustrated cylinder pressure sensor that detects the pressure inside the master cylinder 17 as the quantity of the braking operation by the driver. Further, the wheels 11FL, 11FR, 11RL, and 11RR are equipped with brake pressure sensors 19FL, 19FR, 19RL, and 19RR that detect the hydraulic oil pressure inside the wheel cylinders 13FL, 13FR, 13RL, and 13RR.

Further, the vehicle 10 is equipped with an acceleration sensor 23 for detecting acceleration in the front-and-rear direction and the left-and-right direction of the host vehicle 10 and a vehicle velocity sensor 25 for detecting a vehicle velocity V of the host vehicle 10. The acceleration sensor 23 may be a single acceleration sensor that can detect acceleration in a biaxial or triaxial direction or may be plural acceleration sensors that can each detect acceleration in a uniaxial direction.

Further, the vehicle 10 is equipped with a vehicle-to-vehicle communication-use transmitting and receiving antenna 27. The transmission and reception of information is performed between surrounding vehicles and the host vehicle 10 by this vehicle-to-vehicle communication-use transmitting and receiving antenna 27. In the present embodiment, the vehicle-to-vehicle communication-use transmitting and receiving antenna 27 receives, particularly from a following vehicle running behind the host vehicle 10, information such as the position, vehicle velocity, acceleration, yaw rate, and weight of the following vehicle and whether or not the following vehicle has a vehicular braking control device on board. Moreover, the host vehicle 10 is, in addition to the vehicle-to-vehicle communication-use transmitting and receiving antenna 27, also equipped with an ultrasonic sensor, a radar device, and an on-board camera that are used to detect the position, vehicle velocity, and acceleration of the following vehicle. The host vehicle 10 may be equipped with more than one device for detecting the position, vehicle velocity, acceleration, and so forth of the following vehicle like in the present embodiment or may be equipped with just any one of these devices.

In addition, as devices for grasping the surrounding environment of the host vehicle 10, the vehicle 10 is equipped with an ITS (intelligent transportation system) communication-use transmitting and receiving antenna 29 and a host vehicle position checking sensor (GPS) 21. The ITS communication-use transmitting and receiving antenna 29 is an antenna for performing information communication between the vehicle 10 and infrastructure surrounding the host vehicle; examples of information that the host vehicle 10 receives include road friction coefficient and road shoulder information, guardrail information, driveway information, and standing tree and other obstacle information. In the case of using the host vehicle position checking sensor 21 in order to grasp the surrounding environment of the host vehicle 10, the host vehicle position checking sensor 21 is configured in such a way that the above-described surrounding environment information that has been stored beforehand is selected on the basis of the position of the host vehicle 10.

The information obtained by these sensors, the vehicle-to-vehicle communication-use transmitting and receiving antenna 27, the ITS communication-use transmitting and receiving antenna 29, and so forth disposed in the vehicle 10 is configured to be importable by the vehicular braking control device (hereinafter called an "SCM (Secondary Collision Mitigation) control device) 30.

### 2. Vehicular Braking Control Device (SCM Control Device)

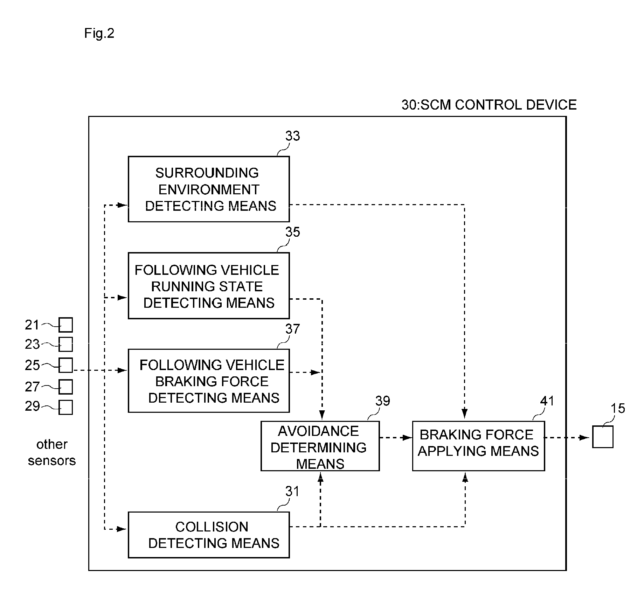

FIG. 2 is a diagram showing a configuration example of the SCM control device 30 of the present embodiment and shows by means of functional blocks the configuration of the SCM control device 30. This SCM control device 30 includes, as its main elements, collision detecting means 31, surrounding environment detecting means 33, following vehicle running state detecting means 35, following vehicle braking force detecting means 37, avoidance determining means 39, and braking force applying means 41. Each of these means is specifically realized by the execution of a program by a microcomputer. Further, the SCM control device 30 is equipped with unillustrated storing means (RAM: Random Access Memory), and imported information and computational results of each means are stored therein.

Of these, the collision detecting means 31 is configured in such a way that it can detect a collision of the host vehicle 10 on the basis of the sensor value of the acceleration sensor 23 disposed in the vehicle 10. For example, the collision detecting means 31 discriminates that the host vehicle 10 has experienced a collision when an abrupt increase in acceleration in a direction differing from the traveling direction of the host vehicle 10 has been detected on the basis of a change in the sensor value of the acceleration sensor 23 stored in the RAM. In addition to this, for example, in a case where the vehicle 10 has an airbag device on board, the collision detecting means 31 may also be configured in such a way that it detects a collision of the host vehicle 10 when an airbag deployment instruction signal resulting from the airbag device has been detected.

The surrounding environment detecting means 33 is configured in such a way that it can detect the surrounding environment of the host vehicle 10 on the basis of the information obtained by the vehicle-to-vehicle communication-use transmitting and receiving antenna 27, the ultrasonic sensor, the radar device, the on-board camera, the ITS information transmitting and receiving-use antenna 29, the host vehicle position checking sensor 21, and so forth disposed in the vehicle 10. For example, information such as whether or not there is an obstacle or the like such as a guardrail or a standing tree, whether or not there is a road shoulder, and the road friction coefficient is detected on the basis of the infrastructure information obtained by the ITS information transmitting and receiving-use antenna 29. Further, front vehicle and oncoming vehicle information is detected on the basis of the information received by the vehicle-to-vehicle communication-use transmitting and receiving antenna 27.

The following vehicle running state detecting means 35 is configured in such a way that it can detect whether or not there is a following vehicle and the running state of the following vehicle, such as its position, vehicle velocity, acceleration, weight, and yaw rate. These pieces of information can be detected by the information that is received by the vehicle-to-vehicle communication-use transmitting and receiving antenna 27 and by the ultrasonic sensor that is disposed in the host vehicle 10. Cases where not only one following vehicle is detected but where plural following vehicles are detected are also conceivable.

The following vehicle braking force detecting means 37 is configured in such a way that it can detect whether or not the following vehicle is equipped with a device that automatically controls the braking force of its host vehicle, such as an ABS or antiskid device (ESP) . The SCM control device 30 of the present embodiment is configured in such a way that these pieces of information are obtained by the vehicle-to-vehicle communication-use transmitting and receiving antenna 27. In other words, these pieces of information become detectable in a case where the following vehicle has a vehicle-to-vehicle communication-use transmitting and receiving antenna on board.

The avoidance determining means 39 is configured in such a way that, when a collision of the host vehicle 10 has been detected by the collision detecting means 31, it can determine whether or not the following vehicle can avoid the host vehicle 10 on the basis of the information detected by the following vehicle running state detecting means 35 and the following vehicle braking force detecting means 37. Whether or not the following vehicle can avoid the host vehicle 10 is determined depending on whether or not there is an inter-vehicle distance in which the following vehicle can stop without rear-ending the host vehicle 10 on the basis, for example, of the inter-vehicle distance between the following vehicle and the host vehicle 10, the vehicle velocities of the host vehicle 10 and the following vehicle, and whether or not the following vehicle has braking force controlling means on board.

The braking force applying means 41 basically performs control of the hydraulic oil pressure on the wheel cylinders 13FL, 13FR, 13RL, and 13RR of the wheels 11FL, 11FR, 11RL, and 11RR of the host vehicle 10 by controlling valve devices and so forth disposed in the oil hydraulic circuit 15. Specifically, the braking force applying means 41 configuring the SCM control device 30 of the present embodiment is configured in such a way that, by controlling the valve devices and so forth of the oil hydraulic circuit 15, it places the host vehicle 10 in the full braking state and adjusts the brake state of the wheels 11FL, 11FR, 11RL, and 11RR in such a way that the host vehicle 10 is safely guided in a predetermined direction in accordance with the steering operation of the driver or an intervention in the steering operation of the host vehicle 10.

For example, in a case where, at the time of a collision of the host vehicle 10, there is no following vehicle or it has been judged that the following vehicle can avoid the host vehicle 10, the braking force applying means 41 applies the braking force in such a way that the host vehicle 10 enters the full braking state in order to avoid a secondary collision of the host vehicle 10 into another obstacle or a front vehicle. Specifically, the braking force applying means 41 increases the supply quantity of the hydraulic oil pressure to the wheel cylinders 13FL, 13FR, 13RL, and 13RR of the wheels 11FL, 11FR, 11RL, and 11RR of the host vehicle 10 to increase the brake force of the wheels 11FL, 11FR, 11RL, and 11RR to the extent that the host vehicle 10 does not spin or the like and become unbrakable.

On the other hand, in a case where, at the time of a collision of the host vehicle 10, it has been judged that it will be difficult for the following vehicle to avoid the host vehicle 10, the braking force applying means 41 judges, from circumstances such as obstacles surrounding the host vehicle 10 detected by the surrounding environment detecting means 33, an avoidance space from a position where the host vehicle 10 will not impede the traveling direction of the following vehicle as much as possible, and the braking force applying means 41 applies the braking force in such a way that the host vehicle 10 is safely guided to the avoidance space in accordance with the steering operation of the driver or an intervention in the steering operation of the host vehicle 10. Specifically, the braking force applying means 41 adjusts the supply quantity of the hydraulic oil pressure to the wheel cylinders 13FL, 13FR, 13RL, and 13RR per each of the wheels 11FL, 11FR, 11RL, and 11RR of the host vehicle 10 and adjusts the brake force in such a way that the host vehicle 10 heads in a predetermined direction.

Examples of the avoidance space that is a position where the host vehicle 10 will not impede the traveling direction of the following vehicle representatively include a road shoulder, an oncoming lane in a case where there is no oncoming vehicle, and a lane in which there is no running following vehicle, but the avoidance space is not limited to these. Particularly in a case where the host vehicle 10 is running on a high-speed dedicated highway or the like, in a case where there is a road shoulder, the braking force applying means 41 of the SCM control device 30 of the present embodiment performs control preferentially in such a way as to guide the host vehicle 10 toward the road shoulder in accordance with the steering operation of the driver or an intervention in the steering operation of the host vehicle 10.

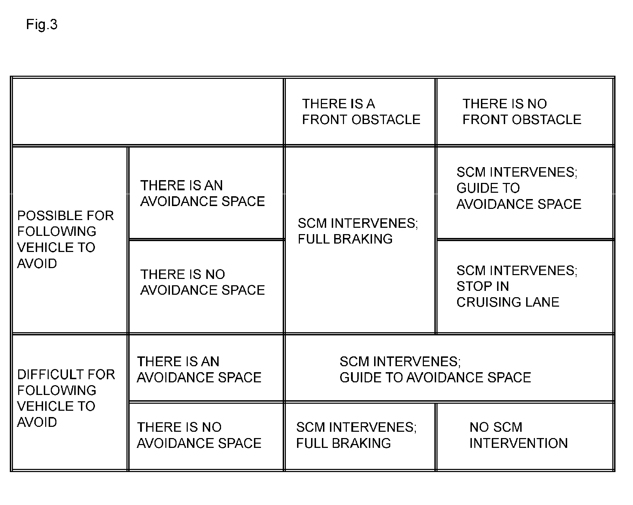

FIG. 3 shows an example of braking force application modes selected by the braking force applying means 41 of the SCM control device 30 of the present embodiment.
In the example shown in FIG. 3, in a case where, at the time of a collision of the host vehicle 10, the following vehicle can avoid the host vehicle 10 and there is an obstacle in front of the host vehicle 10, the braking force applying means 41 applies the braking force in such a way that the host vehicle 10 enters the full braking state. Further, in a case where, at the time of a collision of the host vehicle 10, the following vehicle can avoid the host vehicle and there is no obstacle in front of the host vehicle 10, if there is an avoidance space such as a road shoulder, the braking force applying means 41 applies the braking force in such a way that the vehicle 10 is guided to the avoidance space, and if there is no avoidance space, the braking force applying means 41 applies the braking force in such a way that the vehicle 10 gently stops in its cruising lane.

Further, in a case where, at the time of a collision of the host vehicle 10, it will be difficult for the following vehicle to avoid the host vehicle 10 and there is an obstacle in front of the host vehicle 10, if there is an avoidance space such as a road shoulder, the braking force applying means 41 applies the braking force in such a way that the vehicle 10 is guided to the avoidance space, and if there is no avoidance space, the braking force applying means 41 applies the braking force in such a way that the vehicle 10 enters the full braking state in light of the magnitude of the collision energy into the front obstacle and the magnitude of the rear-end collision energy from the following vehicle. Moreover, in a case where, at the time of a collision of the host vehicle 10, it will be difficult for the following vehicle to avoid the host vehicle 10 and there is no obstacle in front of the host vehicle 10, if there is an avoidance space such as a road shoulder, the braking force applying means 41 applies the braking force in such a way that the host vehicle 10 is guided to the avoidance space, and if there is no avoidance space, the braking force applying means 41 does not apply the braking force in order to avoid an unexpected situation resulting from applying the braking force.

### 3. Control Flow

Next, a control flow at the time of a collision of the host vehicle 10 that is performed by the SCM control device 30 of the present embodiment will be described in detail on the basis of the flow in FIG. 3.
First, in step S1, the sensor value of the acceleration sensor 23 is imported and is stored in the RAM. Next, in step S2, whether or not the host vehicle 10 has experienced a collision is determined from a change in the sensor value of the acceleration sensor 23 stored in the RAM. If a collision of the host vehicle 10 is not detected, the control flow returns to step S1, and when a collision of the host vehicle 10 has been detected, the control flow advances to step S3.

Next, in step S3, the surrounding environment of the host vehicle 10 and the information of the following vehicle are detected. Specifically, information received or obtained by the vehicle-to-vehicle communication-use transmitting and receiving antenna 27, the ITS information communication-use antenna 29, the ultrasonic sensor, the radar device, the on-board camera, and so forth is detected.

Next, in step S4, whether or not there is a following vehicle is determined. In a case where there is a following vehicle, the control flow advances to step S5, and in a case where there is no following vehicle, the control flow advances to step S6. In step S5, to which the control flow advances when it has been judged that there is a following vehicle, whether or not the following vehicle can avoid the host vehicle 10 is determined. In the present embodiment, in the SCM control device 30, a determination of whether or not there is an inter-vehicle distance that is sufficient for the following vehicle to stop in without rear-ending the host vehicle 10 is performed on the basis of information such as the vehicle velocity and acceleration of the host vehicle 10, which are detected on the basis of the vehicle velocity sensor 25 and the acceleration sensor 23, and the position, vehicle velocity, acceleration, yaw rate, and weight of the following vehicle and whether or not the following vehicle has a braking control device on board, which are detected on the basis of vehicle-to-vehicle communication and the ultrasonic sensor.

In a case where it has been judged in step S5 that there is not a sufficient inter-vehicle distance, the control flow advances to step S11, and in a case where it has been judged in step S5 that there is a sufficient inter-vehicle distance, the control flow advances to step S6.
In step S6, to which the control flow has advanced in a case where it has been determined in step S4 that there is no following vehicle or in a case where it has been determined in step S5 that there is a sufficient inter-vehicle distance between the host vehicle 10 and the following vehicle, whether or not there is an obstacle in front of the host vehicle 10 is determined. Specifically, whether or not there is an obstacle such as a guardrail or a standing tree, or a front vehicle, or an oncoming vehicle or the like in front of the host vehicle 10 is determined on the basis of ITS communication, vehicle-to-vehicle communication, and the ultrasonic sensor.

In a case where it has been determined in step S6 that there is no obstacle in front of the host vehicle 10, the control flow advances to step S8, and in a case where it has been determined in step S6 that there is an obstacle in front of the host vehicle 10, the control flow advances to step S7. In step S7, because there is a sufficient inter-vehicle distance in which the following vehicle can stop without rear-ending the host vehicle 10 and because there is an obstacle in front, the valve devices and so forth of the oil hydraulic circuit 15 are controlled and the braking force is applied in such a way that the host vehicle 10 enters the full braking state; then, control is ended. Because of this, the host vehicle 10 promptly stops, and a secondary collision is avoided.

On the other hand, in step S8, to which the control flow has advanced when it has been determined that there is no obstacle in front, whether or not there is an avoidance space such as a lane in which no following vehicle or oncoming vehicle is currently running or a road shoulder is detected. In a case where there is such an avoidance space, the control flow advances to step S9 in order to stop the host vehicle 10 in a safer position, the valve devices and so forth of the oil hydraulic circuit 15 are controlled and the braking force is applied to the host vehicle 10 in such a way that the host vehicle 10 is guided in the direction of the avoidance space in accordance with the steering operation of the driver or an intervention in the steering operation of the host vehicle 10; then, control is ended. On the other hand, in a case where there is no avoidance space, the control flow advances to step S10, and because there is also no fear that a following vehicle will rear-end the host vehicle 10, the brake devices and so forth of the oil hydraulic circuit 15 are controlled and the braking force is applied in such a way that the host vehicle 10 gently stops in its cruising lane; then, control is ended. Because of this, the host vehicle 10 is guided to and stops in a space that is as safe as possible, and a secondary collision is avoided.

Further, in step S11, to which the control flow has advanced when it has been determined in step S5 that there is not a sufficient inter-vehicle distance in which the following vehicle can stop without rear-ending the host vehicle 10, whether or not there is an avoidance space for the host vehicle 10 in which the host vehicle 10 will not impede the travel of the following vehicle as much as possible is detected. Specifically, whether or not there is an avoidance space for the host vehicle 10 is detected by detecting whether or not there is a road shoulder or the like adjacent to a driveway and whether or not an oncoming car in the oncoming lane is approaching on the basis of ITS communication, vehicle-to-vehicle communication, the ultrasonic sensor, and so forth. In a case where there is an avoidance space such as a road shoulder adjacent to a driveway, that space is preferentially selected.

In a case where an avoidance space for the host vehicle 10 has been detected in step S11, the control flow advances to step S9 in order to avoid a rear-end collision from the following vehicle, and the brake devices and so forth of the oil hydraulic circuit 15 are controlled and the braking force is applied to the host vehicle 10 in such a way that the host vehicle 10 is guided in the direction of the avoidance space in accordance with the steering operation of the driver or an intervention in the steering operation of the host vehicle 10; then, control is ended. Because of this, a secondary collision of the host vehicle 10 is avoided while avoiding a rear-end collision from the following vehicle.

On the other hand, in a case where an avoidance space for the host vehicle 10 has not been detected in step S11, the control flow advances to S12, and whether or not there is an obstacle in front of the host vehicle 10 is determined by the same method as in step S6. In a case where there is an obstacle in front of the host vehicle 10, the control flow advances to step S7 in light of the magnitude of the collision energy to the front obstacle and the magnitude of the rear-end collision energy from the following vehicle, and the brake devices and so forth of the oil hydraulic circuit 15 are controlled and the braking force is applied in such a way that the host vehicle 10 enters the full braking state; then, control is ended. Further, in a case where there is no obstacle in front of the host vehicle 10, the control flow advances to step S13 and a selection is made for no intervention by the braking force applying means 41 in order to avoid an unexpected situation of the host vehicle 10 resulting from the application of the braking force to the host vehicle 10 by the SCM control device 30; then, control is ended as is.

As described above, because of the control performed by the SCM control device 30 of the present embodiment, at a time of collision of the host vehicle 10, in a circumstance where the following vehicle can avoid the host vehicle 10, the host vehicle 10 can be promptly and safely stopped, and in a circumstance where it will be difficult for the following vehicle to avoid the host vehicle 10, the host vehicle 10 is guided to a position that is as safe as possible. As a result, a secondary collision, such as a rear-end collision from the following vehicle or a collision into an obstacle in front, at the time of a primary collision of the host vehicle 10 is reduced.

The above-described control flow is an example of a specific flow for implementing the present invention and can be appropriately changed. For example, the order in which the steps of determining whether or not the following vehicle can avoid the host vehicle, whether or not there is an obstacle in front of the host vehicle, and whether or not there is an avoidance space are implemented may also be switched.
Further, as a premise for performing control in the SCM control device, in a case where the potential for a rear-end collision from a following vehicle is small, it is also conceivable for the braking force application mode that is selected to differ depending on whether to preferentially consider guiding the host vehicle to an avoidance space or whether to preferentially consider stopping the host vehicle in its cruising lane. For example, in a case where the following vehicle can avoid the host vehicle 10, the host vehicle 10 may also be placed in the full braking state regardless of whether or not there is an obstacle in front.

## Claims

1. A vehicular braking control device equipped with collision detecting means that detects a collision of a host vehicle and braking force applying means that applies a braking force to the host vehicle when a collision of the host vehicle has been detected, the vehicular braking control device comprising:
following vehicle running state detecting means that detects whether or not there is a following vehicle and the running state thereof;
following vehicle braking force detecting means that detects whether or not the following vehicle has a braking control device on board; and
avoidance determining means which, in a case where there is the following vehicle at the time of a collision of the host vehicle, discriminates whether or not the following vehicle can avoid the host vehicle on the basis of information detected by the following vehicle running state detecting means and the following vehicle braking force detecting means,
wherein the braking force applying means varies the braking force it applies to the host vehicle on the basis of the result of the determination by the avoidance determining means.

2. The vehicular braking control device according to claim 1, wherein in a case where it is not discriminated that the following vehicle can avoid the host vehicle, the braking force applying means applies the braking force in such a way as to guide the host vehicle to a position where the host vehicle will not impede the traveling direction of the following vehicle.

3. The vehicular braking control device according to claim 1 or 2, further comprising road shoulder information detecting means that detects whether or not there is a road shoulder in the traveling direction of the host vehicle at the time of a collision of the host vehicle, wherein in a case where it is not discriminated that the following vehicle can avoid the host vehicle, when the road shoulder has been detected, the braking force applying means applies the braking force in such a way as to guide the host vehicle in the road shoulder direction.

4. The vehicular braking control device according to any one of claims 1 to 3, further comprising obstacle detecting means that detects whether or not there is an obstacle in the traveling direction of the host vehicle at the time of a collision of the host vehicle, wherein in a case where it has been discriminated that the following vehicle can avoid the host vehicle, when an obstacle has been detected in front of the host vehicle, the braking force applying means applies the braking force in such a way as to promptly stop the host vehicle.

5. The vehicular braking control device according to claim 4, wherein in a case where it has been discriminated that the following vehicle can avoid the host vehicle, when an obstacle has not been detected in front of the host vehicle and the road shoulder has been detected, the braking force applying means applies the braking force in such a way as to guide the host vehicle in the road shoulder direction.

6. The vehicular braking control device according to any one of claims 1 to 3, wherein in a case where it has been discriminated that the following vehicle can avoid the host vehicle, the braking force applying means applies the braking force in such a way as to promptly stop the host vehicle.

7. The vehicular braking control device according to any one of claims 1 to 6, wherein the avoidance determining means detects whether or not there is an inter-vehicle distance in which the following vehicle can stop without colliding into the host vehicle when the host vehicle has been promptly stopped by the braking force applying means.
